# EUROPÄISCHE PATENTANMELDUNG

(11) **EP 4 385 730 A1**
(43) Veröffentlichungstag der Anmeldung: **19.06.2024**
(21) Anmeldenummer: 23216857.5
(22) Anmeldetag: 14.12.2023
(51) Int. Cl.: B32B 27/08, B32B 7/022, B32B 7/027, B32B 27/32

(54) **KUNSTSTOFFFOLIE UND VERFAHREN ZU DEREN HERSTELLUNG**

(30) Priorität: 14.12.2022 DE 102022133229
(71) Anmelder: Constantia Pirk GmbH & Co. KG, 92712 Pirk (DE)
(72) Erfinder: Acker, Tobias, 65629 Niederneisen (DE); Schneider, Thomas, 65232 Taunusstein (DE); Geillersdörfer, Ingo, 92708 Mantel (DE)
(74) Vertreter: Bittner, Bernhard

(57) **Zusammenfassung**

Mehrlagige Kunststofffolie (1) mit einer Basisschicht (2), mit einer ersten Deckschicht (4), welche zumindest mittelbar an einer ersten Oberfläche (2a) der Basisschicht angeordnet ist, und mit einer zweiten Deckschicht (6), welche zumindest mittelbar an einer zweiten Oberfläche (2b) der Basisschicht (2) angeordnet ist, wobei die zweite Oberfläche (2b) der ersten Oberfläche (2a) gegenüberliegt, dadurch gekennzeichnet, dass die Kunststofffolie unter Verwendung eines Extrusionsverfahrens hergestellt ist und die Kunststofffolie (1) wenigstens ein die Falteigenschaften der Kunststofffolie verbesserndes Material aufweist.

## Beschreibung

Die vorliegende Erfindung bezieht sich auf eine mehrlagige Kunststofffolie, insbesondere zum Verpacken von Lebensmitteln. Die Erfindung wird unter Bezugnahme auf Verpackungen beispielsweise für Kaffee beschrieben. Derartige Verpackungen werden im Stand der Technik üblicherweise aus einem Laminat von PET, Aluminium und PE (Polyethylen) hergestellt. Das Aluminium wird bei derartigen Laminaten üblicherweise verwendet, weil es eine hohe Barrierewirkung gegenüber Wasserdampf und Sauerstoff aufweist, typischerweise weniger als 1 g / m² / Tag. Zudem weist Aluminium günstige Falteigenschaften auf. Insbesondere wird dabei auf die sog. "dead fold" Eigenschaften Bezug genommen, also die Eigenschaft, dass sich ein Material nach einem Faltvorgang nicht wieder spontan entfaltet. Derartige Laminate, hier beispielsweise ein Triplex Laminat, sind im Hinblick auf die Nachhaltigkeit sehr ungünstig. Diese sind nicht recyclierbar.

Der vorliegenden Erfindung liegt daher die Aufgabe zugrunde, eine mehrlagige Folie, insbesondere in Form einer Monomaterial-Kunststoffstruktur, zur Verfügung zu stellen, welche einerseits vergleichbare Falteigenschaften gegenüber Strukturen mit Aluminium aufweist und welche andererseits in verbesserter Weise recyclierbar ist bzw. welche gegenüber dem Stand der Technik nachhaltiger ausgebildet ist.

Diese wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße mehrlagige Kunststofffolie weist eine Basisschicht und/oder eine Basislage auf, eine erste Deckschicht, welche zumindest mittelbar an einer ersten Oberfläche der Basisschicht angeordnet ist und eine zweite Deckschicht, welche zumindest mittelbar an der zweiten Oberfläche der Basisschicht bzw. Basislage angeordnet ist, wobei die zweite Oberfläche der ersten Oberfläche gegenüberliegt.

Erfindungsgemäß ist die Kunststofffolie unter Verwendung eines Extrusionsverfahrens hergestellt und die Kunststofffolie weist wenigstens ein die Falteigenschaften der Kunststofffolie verbesserndes Material auf.

Bevorzugt weist die Basisschicht eine Dicke auf, die größer ist als 10µm, bevorzugt größer als 15µm, bevorzugt größer als 20µm, bevorzugt größer als 30µm.

Bevorzugt weist die Basisschicht eine Dicke auf, die kleiner ist als 200µm, bevorzugt kleiner als 100µm, bevorzugt kleiner als 80µm, bevorzugt kleiner als 60µm.

Bevorzugt weist wenigstens eine Deckschicht und weisen bevorzugt beide Deckschichten jeweils eine Dicke auf, die größer ist als 1µm, bevorzugt größer als 2µm, bevorzugt größer als 4µm, bevorzugt größer als 6µm.

Bevorzugt weist wenigstens eine Deckschicht und weisen bevorzugt beide Deckschichten jeweils eine Dicke auf, die kleiner ist als 30µm, bevorzugt kleiner als 25µm, bevorzugt kleiner als 20µm, bevorzugt kleiner als 15µm.

Bevorzugt weist die Kunststofffolie eine Dicke auf, die größer ist als 12µm, bevorzugt größer als 30µm, bevorzugt größer als 40µm, bevorzugt größer als 50µm.

Bevorzugt weist die Kunststofffolie eine Dicke auf, die kleiner ist als 300µm, bevorzugt kleiner als 200µm, bevorzugt kleiner als 150µm, bevorzugt kleiner als 100µm.

Bevorzugt weist die Folie wenigstens 3 Schichten bzw. Lagen auf. Bevorzugt weist die Folie höchstens 8, bevorzugt höchstens 7 und bevorzugt höchstens 6 Schichten und/oder Lagen auf.

Bevorzugt bestehen mehrere Schichten und bevorzugt alle Schichten der Folie aus dem gleichen Basismaterial und/oder weisen dieses Basismaterial auf. Bei diesem Basismaterial kann es sich bevorzugt um PP oder PE handeln.

Unter einer wenigstens mittelbaren Anordnung der Deckschicht an der Basisschicht wird dabei insbesondere verstanden, dass diese Deckschicht unmittelbar an der Basisschicht anliegen kann oder aber zwischen der Deckschicht und der Basisschicht noch wenigstens eine weitere Schicht und bevorzugt genau eine weitere Schicht angeordnet ist.

Unter einem die Falteigenschaften verbessernden Material wird insbesondere ein Material verstanden, welches die sog. Deadfold Eigenschaften verbessert, also die Eigenschaft, dass sich ein gefaltetes Material nicht oder nur wenig wieder spontan entfaltet. Unter einer Verbesserung dieser Eigenschaft wird daher insbesondere verstanden, dass durch das besagte Material bewirkt wird, dass die Tendenz der Folie, sich von einem gefalteten Zustand wieder spontan zu entfalten, reduziert wird.

Es wird daher vorgeschlagen, einerseits die Kunststofffolie unter Verwendung eines Extrusionsverfahrens herzustellen und andererseits deren Falteigenschaften zu verbessern.

Um die Falteigenschaften zu überprüfen sind aus dem Stand der Technik Messverfahren bekannt. Bei einem auch im Rahmen der Erfindung verwendeten Messverfahren werden aus einer Folie Folienstreifen ausgeschnitten und insbesondere längs und quer zu einer Maschinenrichtung ausgeschnitten.

Bevorzugt werden Muster ausgeschnitten, welche in der Maschinenrichtung eine Länge aufweisen, die größer ist als 5 cm bevorzugt größer als 7 cm, bevorzugt größer als 8 cm und bevorzugt größer als 9 cm. Bevorzugt ist diese Länge in Maschinenrichtung kleiner als 20 cm bevorzugt kleiner als 18 cm, bevorzugt kleiner als 15 cm, bevorzugt kleiner als 12 cm. Besonders bevorzugt ist die Länge des Musters in Maschinenrichtung 10 cm.

Besonders bevorzugt ist eine Breite des Musters in der Querrichtung größer als 1 cm bevorzugt bei ca. 1,5 cm. Besonders bevorzugt ist diese Größen in der Breitenrichtung geringer als 2 cm. Diejenigen Muster, die quer zu Maschinenrichtung ausgeschnitten werden, weisen ebenfalls entsprechende Abmessungen auf.

So ist die Länge quer zur Maschinenrichtung, wie oben erwähnt, bevorzugt größer als 5cm, bevorzugt größer als 7cm, bevorzugt größer als 8 cm, bevorzugt kleiner als 20cm, bevorzugt kleiner als 18cm, bevorzugt kleiner als 15cm, bevorzugt kleiner als 12 cm und besonders bevorzugt bei ungefähr 10 cm.

Die Breite in Maschinenrichtung liegt entsprechend zwischen 1cm und 2 cm und bevorzugt bei ca. 1,5 cm.

In einem weiteren Schritt des Messverfahrens werden die besagten Folienmuster an einer vorgegebenen Position gefaltet, bevorzugt an einer neun Zentimeter Linie. Dieses Falten erfolgt dabei bei einer vorgegebenen Temperatur, die bevorzugt zwischen 20°C und 30°C, bevorzugt zwischen 22°C und 28°C und besonders bevorzugt bei 25°C liegt.

Besonders bevorzugt wird eine Faltung von 180 Grad vorgenommen.

Besonders bevorzugt wird die Falte eine vorgegebene Zeitdauer gepresst, insbesondere eine Zeitdauer von 10 Sekunden. Als Anpressdruck wird ein Anpressdruck verwendet, der zwischen 25bar und 35bar bevorzugt zwischen 27bar und 33bar besonders bevorzugt bei ca. 30bar liegt (bezogen auf die Faltfläche). Dabei kann diese Faltung oder die Bearbeitung mit einem Wärmekontakt Heißsiegelgerät vorgenommen werden, bevorzugt mit Heißsiegelgerät vom Typ HSG-C, etwa der Firma Brugger Feinmechanik GmbH, München.

Besonders bevorzugt werden jeweils eine vorgegebene Anzahl von Mustern in der oben bezeichneten Weise gefaltet. Weiterhin werden diese Muster eine vorgegebene Zeitdauer, beispielsweise 5 Stunden gelagert und dann wird jeweils der Faltwinkel bestimmt. Dabei wird bevorzugt als verbleibender Faltwinkel die Summe der gemessenen Faltwinkel geteilt durch die Musteranzahl definiert.

Anschließend wird dieser resultierende (durchschnittliche) Faltwinkel bewertet. Ein sich ergebender Faltwinkel von weniger als 15° wird als sehr gut bewertet, ein Faltwinkel von zwischen 15° und 30° wird bevorzugt als gut bewertet, ein Faltwinkel von 30°- 40° wird als mittelmäßig bewertet und einen verbleibender Faltwinkel von mehr als 40° als schlecht.

Bevorzugt wird unter einem Material mit verbesserten Falteigenschaften gegenüber herkömmlichen Monokunststoffstrukturen ein Material verstanden, dessen verbleibender Faltwinkel nach der oben gegebenen Bewertung zumindest mittelmäßig, bevorzugt zumindest als gut angesehen wird, d. h. ein Faltwinkel, der bevorzugt <40°, bevorzugt <35°, besonders bevorzugt < 30°, besonders bevorzugt <25° und besonders bevorzugt <20° ist.

Durch die Erfindung kann eine Verbesserung der Falteigenschaft insbesondere im Vergleich zu herkömmlichen Kunststofffolien (ohne Aluminium) erreicht werden. Im Vergleich zu einem PET/AI/PE -Verbund weist die hier beschriebene Kunststofffolie vergleichbare Werte auf. Mit dem hier beschriebenen Aufbau wird also erreicht, dass eine Mono-Kunststoff-Struktur ähnliche Falteigenschaften wie eine Aluminiumenthaltende Struktur aufweist.

Die genannte erste Deckschicht kann dabei ein- oder auch mehrlagig ausgebildet sein. Bei einer weiteren vorteilhaften Ausführungsform ist wenigstens eine der genannten Schichten oder Lagen aus PP (Polypropylen) oder PE (Polyethylen) hergestellt.

Besonders bevorzugt ist wenigstens eine Schicht aus PP Homopolymeren und/oder PP Random Copolymeren und/oder PP Blockcopolymeren oder Mischungen aus den vorhergenannten Typen hergestellt, wobei besonders bevorzugt in und/oder zwischen zwei Schichten und/oder Lagen ein Twistharz verwendet wird.

Bei dem hier beschriebenen "Twistharz handelt es sich insbesondere um ein Kohlenwasserstoffharz, daher kann anstelle des Begriffes "Twistharz" auch der Begriff Kohlenwasserstoffharz verwendet werden.

Neben oder anstelle von PP könnte auch PE in unterschiedlichen Dichten verwendet werden. So könnte beispielsweise LD-PE, LLD-PE, HD-PE, MD-PE oder MLLD-PE verwendet werden. Besonders bevorzugt wird HD-PE verwendet.

Ein derartiges Twistharz kann verwendet werden, damit eine äußere Schicht aus einem Schichtverbund oder auch einer mehrlagigen Folie zum Falten geeignet ist. Falls, wie oben erwähnt, PP oder PE eingesetzt wird, wird dieses vorzugsweise nicht orientiert und/oder gereckt. Weiterhin wäre es jedoch möglich, gerecktes PE oder PP einzusetzen.

Im Rahmen der vorliegenden Erfindung werden insbesondere zwei Vorgehensweisen vorgeschlagen um die Falteigenschaften (Deadfold) zu verbessern, einerseits durch die Verwendung von COC (Cycloolefin Copolymer) oder durch die Verwendung des erwähnten Twistharzes. Diese Substanzen können sich dabei in der Deckschicht und/oder der Basisschicht (insbesondere einer CPP oder PE Schicht und/oder einer Siegelschicht) befinden.

Bei einer bevorzugten Ausführungsform ist wenigstens eine der genannten Schichten mit dem die Falteigenschaften verbessernden Material versehen und/oder wenigstens eine der Schichten weist das die Falteigenschaften verbessernde Material auf.

Zum Vergleich der Falteigenschaften einer beispielhaften mehrlagigen Folie beziehungsweise einem eine solche Folie umfassenden Laminats mit aus dem Stand der Technik bekannten ((metallfreien) Kunststoff-) Folien wurden Faltversuche durchgeführt. Dabei wurden die Falteigenschaften eines aus dem Stand der Technik bekannten Standard-Laminat mit einem Laminat in einer bevorzugten Ausführungsform, nämlich mit einer bevorzugten Kunststofffolie mit COC zwischen den Deckschichten (sowohl als Duplex- als auch Triplex-Laminat), verglichen. Die Vergleichsversuche wurden nach dem oben beschriebenen Messverfahren durchgeführt. Die geprüften Muster wurden in Maschinenrichtung entnommen.

Die Ergebnisse der Vergleichsversuche der Falteigenschaften sind in Tabelle 1 dargestellt. Wie den darin angegebenen Informationen zum Aufbau der einzelnen Prüfkörper zu entnehmen ist, ist das geprüfte Standard-Laminat um 7 µm dicker als die beispielhaften Prüfkörper gemäß der vorliegenden Erfindung. Es zeigte sich jedoch, dass dieser Unterschied keinen Einfluss auf die Falteigenschaften hat.

**Tabelle 1**

| Variante | Aufbau | Verbleibender Faltwinkel |
|---|---|---|
| Duplex-Laminat mit COC zwischen den Deckschichten | OPPmet 18 µm; | 45° |
| | CPP (siegelfähige Kunststofffolie mit verbesserter Falteigenschaft) 85 µm | |
| Triplex-Laminat mit COC zwischen den Deckschichten | OPPmet 18 µm; | 45° |
| | CPP (Kunststofffolie mit verbesserter Falteigenschaft mit COC) 50 µm; | |
| | CPP (peelfähige Siegelfolie) 35 µm | |
| Standard-Laminat (Stand der Technik) | OPPmet 20 µm; | 80° |
| | OPPmet 20 µm; | |
| | CPP 70 µm | |

Wie Tabelle 1 zu entnehmen ist, ist der verbleibende Faltwinkel bei den Prüfkörpern gemäß Ausführungsformen der vorliegenden Erfindung deutlich geringer als bei dem aus dem Stand der Technik bekannten Vergleichsprodukt.

Bei einer weiteren vorteilhaften Ausgestaltung ist das die Falteigenschaften verbessernde Material zwischen wenigstens zwei der Schichten angeordnet. Besonders bevorzugt ist das die Falteigenschaften verbessernde Material in mehreren und besonders bevorzugt in allen der genannten Schichten angeordnet. Daneben wäre es auch möglich, dass das die Falteigenschaften verbessernde Material zwischen mehreren und bevorzugt zwischen allen der genannten Schichten angeordnet ist.

Besonders bevorzugt ist ein (Massen-) Anteil des die Falteigenschaften verbessernden Materials bezogen auf die Gesamtmasse der Folie geringer als 70 %, bevorzugt geringer als 60 % und bevorzugt geringer als 50 % und besonders bevorzugt geringer als 45 %. Dabei ist dieser Anteil besonders bevorzugt bezogen auf das Gesamtgewicht der Schicht, in der das die Falteigenschaften verbessernde Material angeordnet ist, oder bezogen auf das Gesamtgewicht der Folie.

Bei einer weiteren vorteilhaften Ausführungsform ist das die Falteigenschaften verbessernde Material aus einer Gruppe von Materialien ausgewählt, welche Polyolefine, insbesondere amorphe Polyolefine, Cycloolefincopolymere (COC) und auf Basis eines Kohlenwasserstoffharzes hergestellte Materialien enthält. Besonders bevorzugt wird dabei COC als einzelne Schicht verwendet d.h. der Gewichtsanteil von COC beträgt bevorzugt bezogen auf diese Schicht 100%.

Wie oben erwähnt, kann es sich bei dem Material, beispielsweise um ein sogenanntes Twistharz handeln.

Ein derartiges Harz kann beispielsweise als Polymermodifier Masterbatch zum Beispiel zur Herstellung von Cast-PP (CPP) oder BOPP (biaxial oriented Polypropylen) - Folien verwendet werden. Daneben wäre es auch möglich, ein Twistharz einzusetzen, welches gemeinsam mit PE verwendbar ist.

Bevorzugt, kann dieses Material in eine Schicht, insbesondere eine Mittelschicht von mehrschichtigen Folien eingegeben werden. Es kann auch in mehrere oder in alle Schichten einer mehrschichtigen Folie eingegeben werden.

Bevorzugt liegt dann ein (Massen)Anteil dieses Harzes zwischen 10% und 100 % bevorzugt zwischen 15% und 50 % bevorzugt zwischen 20% und 45 % und besonders bevorzugt zwischen 25% und 40 %.

Bei einer weiteren bevorzugten Ausführungsform ist wenigstens eine - insbesondere außenliegende - Lage wenigstens einer Deckschicht siegelfähig. Besonders bevorzugt enthält diese Lage und/oder diese Deckschicht ein Siegelpolymer. Besonders bevorzugt sind beide Deckschichten siegelfähig. Besonders bevorzugt weist eine Deckschicht mehrere Lagen auf.

Bei einer besonders bevorzugten Ausführungsform ist zumindest eine außenliegende Lage der Deckschicht siegelfähig. Diese zumindest eine siegelfähige Lage ist bevorzugt festversiegelnd oder peelfähig. Insbesondere handelt es sich hierbei um eine Lage, die einem zu verpackenden Gut zugewandt ist.

Bei einer weiteren bevorzugten Ausführungsform enthält das Siegelpolymer der siegelfähigen Lage und/oder Deckschicht ein Terpolymer. Besonders bevorzugt ist dieses Siegelpolymer auf Polyolefinbasis gebildet. Besonders bevorzugt weist diese Schicht eine niedrige Siegelinitiierungstemperatur auf, die besonders bevorzugt unter 150 °C bevorzugt unter 140°C, bevorzugt unter 130 °C und besonders bevorzugt unter 120 °C liegt.

Bei einer weiteren vorteilhaften Ausführungsform ist die Folie selbst orientiert. Besonders bevorzugt ist die Folie selbst jedoch ohne einen bevorzugten Reckgrad orientiert.

Bei einer weiteren vorteilhaften Ausführungsform enthält die Kunststofffolie ein Polymer, welches dazu geeignet und bestimmt ist, die Sprödigkeit zu verbessern und/oder zu verringern.

Die Anmelderin hat umfangreiche Faltversuche mit der hier beschriebenen Folien durchgeführt. Dabei wurde sowohl COC als auch Twistharz verwendet. Es konnte festgestellt werden, dass mit Twistharz oder COC bessere Werte, d. h. wie oben erwähnt, kleinere Winkel erreicht werden gegenüber nicht modifizierten Monomaterial-Kunststoffstrukturen.

In einem Laminat (eine Siegelfolie wird mit anderen Folien verbunden) kann die Falteigenschaft beeinflusst werden, je nachdem, welches Material und welche Dicken verwendet werden.

Bei einem bevorzugten Verfahren werden zwischen 10% und 40 % Twistharz in jeder Lage verwendet. In jedem Extruder wird bevorzugt zu gleichen Mengen Twistharz zugeführt.

Es wäre auch denkbar, ein Twistharz als einzelne Lage vorzusehen und nicht beizumischen. Somit wird das Twistharz als weitere Schicht zwischen Basisschicht und Deckschicht verwendet.

Bevorzugt wird ein Terpolymer als Siegelpolymer für die zumindest eine außenliegende Lage einer Deckschicht verwendet. Dieses weist bevorzugt einen Elastizitätsmodul zwischen 300 und 1000 MPa auf. Es kann ein Terpolymer sowohl auf Basis von Polyethylen als auch von Polypropylen verwendet werden.

Bevorzugt wird ein Terpolymer auf Basis von Polyethylen verwendet, wenn zumindest eine der Schichten ausgewählt aus Basisschicht und Deckschichten aus Polyethylen besteht oder wenn der überwiegende Anteil der Lagen bzw. Schichten der Kunststofffolie aus Polyethylen besteht. Analog wird bevorzugt ein Terpolymer auf Basis von Polypropylen verwendet, wenn zumindest eine der Schichten ausgewählt aus Basisschicht und Deckschichten aus Polypropylen besteht. Somit wird ein möglichst sortenreiner Aufbau der Kunststofffolie ermöglicht.

Besonders bevorzugt handelt es sich bei dem Terpolymer um ein Material, welches auch als Abdichtung oder metallisierte Schicht in coextrudierten Filmanwendungen verwendet werden kann. Bevorzugt weist dieses Produkt Antiblockadditive auf.

Bei einer bevorzugten Ausgestaltung weist das Terpolymer eine Schmelzflussrate (bestimmt bei 230 °C pro 2,16 kg) auf, die in einem Bereich zwischen 4 und 7, bevorzugt zwischen 5 und 6 g pro 10 Minuten liegt (bestimmt nach ISO 1133-1).

Bevorzugt liegt eine Dichte dieses Materials (gemessen 23 °C und der Methode A) zwischen 0,80 und 1,0 g/cm³ bevorzugt bei ca. 0,90 g/cm³.

Bevorzugt, liegt eine SIT (Seal initiation temperature) (bezogen auf 30 µm) zwischen 95 und 115 °C, bevorzugt zwischen 100 und 110 °C und besonders bevorzugt bei ca. 105 °C (gemessen mit der LYB Methode).

Bei einer weiteren bevorzugten Ausführungsform wird ein Polyolefin verwendet, welches speziell für die Verwendung in einer Abdichtungsschicht in einem coextrudierten Film bzw. entsprechenden Anwendungen ausgestaltet ist. Dieses zeichnet sich bevorzugt durch eine sehr geringe SIT aus, die bevorzugt zwischen 60°C und 100°C, bevorzugt zwischen 65°C und 90 °C und besonders bevorzugt zwischen 70°C und 80 °C liegt.

Bevorzugt liegt hier eine Schmelzflussrate (32 °C pro 2,16 kg) zwischen 5g und 6 g pro 10 Minuten, wobei hier die Testmethode ISO 1133-1 zugrunde gelegt wird. Bevorzugt liegt eine Dichte (23 °C, Methode A) in einem Bereich zwischen 0,85 - 0,95 g/cm³, wobei hier das Testverfahren ISO 1183-1 zugrunde gelegt wird.

Eine SIT des Films oder der Schicht (bezogen auf 30 µm liegt, bevorzugt zwischen 70 °C und 80 °C und bevorzugt einen Bereich von 75 °C. Dabei wird die LYB Methode zugrunde gelegt.

Bei einer weiteren bevorzugten Ausführungsform ist wenigstens eine - insbesondere außenliegende - Lage wenigstens einer Deckschicht siegel- und peelfähig. Besonders bevorzugt ist diese Lage und/oder diese Deckschicht auf Basis eines sogenannten Peelcompound gebildet und/oder enthält wenigstens ein Peelcompound. Dieses Peelcompound wird insbesondere eingesetzt, wenn die jeweilige Anwendung eine Peeleigenschaft erfordert. Es kann ein Peelcompound sowohl auf Basis von Polyethylen als auch von Polypropylen verwendet werden. Somit wird ein möglichst sortenreiner Aufbau der Kunststofffolie ermöglicht. Es ist möglich, dieses Peelcompound in mehrschichtigen Flachfolien zu 100 % als peelfähige Siegelschicht zu verwenden.

Bevorzugt weist das Peelcompound eine Dichte auf, die zwischen 0,8 und 1,0 g/cm³, liegt. Dabei wird die Dichte mit einem Verfahren gemäß ISO 1183 gemessen.

Bei den weiteren bevorzugten Verfahren wird COC verwendet. Dieses wird bevorzugt in und/oder zwischen zumindest einer der Deckschichten beziehungsweise einer der Lagen der Deckschichten verwendet. Die Deckschichten sind wie oben beschrieben vorrangig aus PE oder PP hergestellt. In einer spröden Ausgestaltung weist diese Komponente (COC) insbesondere einen Elastizitätsmodul zwischen 2000 und 2500 MPa und insbesondere zwischen 2150 und 2250 MPa auf.

Besonders bevorzugt, liegt eine Dichte des COC zwischen 0,9 g/cm³ und 1,1 g/cm³, bevorzugt zwischen 0,95 g/cm³ und 1,06 g/cm³ und besonders bevorzugt zwischen 1,0 g/cm³ und 1,02 g/cm³, wobei hier ein Testverfahren gemäß ISO 1183 oder die 23° Methode verwendet wird.

Bevorzugt liegt eine Schmelzvolumenrate (melt volume rate (MVR)), betrachtet bei 230 °C und 2,16 kg zwischen 10 und 14 cm³ / 10 Minuten bevorzugt zwischen 11,5 und 12,5 cm³ / 10 Minuten, wobei hier auf das Testverfahren gemäß ISO 1133 zurückgegriffen wird.

Bevorzugt liegt eine Schmelzvolumenrate (Melt volume rate, (MVR) (bei 190 °C und 2,16 kg) zwischen 1 cm³ pro 10 Minuten und 3 cm³ pro 10 Minuten bevorzugt zwischen 1,5 cm³ pro 10 Minuten und 2,5 cm³ pro 10 Minuten bevorzugt zwischen 1,8 und 2,2 cm³ pro 10 Minuten. Auch hier wird bevorzugt auf das Messverfahren gemäß ISO 1133 zurückgriffen.

Bevorzugt liegt eine Glasübergangstemperatur (10 °C /min), zwischen 75°C und 80 °C, bevorzugt zwischen 76°C und 80°C und besonders bevorzugt bei ca. 78 °C. Dabei wurde mit den Test Standard ISO 11357-1, -2, -3 gemessen.

Bevorzugt liegt der Elastizitätsmodul (tensile modus) in Maschinenrichtung zwischen 1900 MPa und 2400 MPa, bevorzugt zwischen 2000 MPa und 2200 MPa, besonders bevorzugt zwischen 2050 MPa und 2105 MPa. Für diese Größe und auch die nachfolgenden Größen wurde jeweils gem. ISO 527-3 gemessen.

Bevorzugt liegt zu Zugfestigkeit in der Transversalrichtung zwischen 1500 und 1900 MPa bevorzugt zwischen 1600 und 1900 MPa und besonders bevorzugt zwischen 1600MPa und 1800 MPa.

Besonders bevorzugt, liegt eine Bruchfestigkeit (tensile strength at break) in der Maschinenrichtung zwischen 52 und 60 MPa bevorzugt zwischen 54 und 58 MPa.

Bevorzugt liegt in der Transversalrichtung diese Kennzahl zwischen 48 und 52 bevorzugt zwischen 49 und 51 MPa.

Bei einer weiteren bevorzugten Ausführungsform liegt eine Bruchdehnung (elongation at break) in der Maschinenrichtung und auch in der transversalen Richtung zwischen 2,5% und 4,0 % bevorzugt zwischen 3,2% und 3,6 %.

Bei einer weiteren bevorzugten Ausführungsform liegt die Elmendorf Zugstärke (Elmendorf tear strength) in der Maschinenrichtung zwischen 200g und 240g, bevorzugt zwischen 220g und 230 g. In der transversalen Richtung liegt diese Zugstärke bevorzugt zwischen 210g und 250 g, bevorzugt zwischen 220 g und 240 g. Gemessen wird hierbei jeweils gemäß ISO 6383 - 2.

Bei einer weiteren vorteilhaften Ausführungsform liegt eine Dart Drop Impact strength (F 50) unter 40 g bevorzugt unter 38 g und besonders bevorzugt unter 36 g. Hierbei ist die Messung bezogen auf das Verfahren ISO 7765 - 1 einschlägig.

Besonders bevorzugt ist eine Wasserdampfpermeabilität bei 38 °C und 90 % relativer Luftfeuchte zwischen 0,7 und 1,0 g × 100µm /m² × Tag bevorzugt zwischen 0,70 und 0,9 und besonders bevorzugt zwischen 0,75 und 0,85. Dabei wird bevorzugt gemäß ISO 15106-3 gemessen.

Bevorzugt liegt eine Sauerstoffpermeabilität bei 23 °C und 50 % relativer Luftfeuchtigkeit in einem Bereich zwischen 180 und 220 (cm³ × 100 µm/m² × Tag × bar) bevorzugt zwischen 190 und 210 und besonders bevorzugt zwischen 195 und 205. Dabei wird wiederum ein Messverfahren gemäß ASTM D 3985 gemessen. Weiterhin wird bevorzugt für die obigen Meßwerte bzw. Parameter auf eine Musterdicke von 0,07 mm zurückgegriffen und als Art der Extrusion wird Cast gewählt.

Falls als Material, das mit dem COC gemischt wird, PP oder PE gewählt wird, sind vorzugsweise Materialien mit einem Elastizitätsmodul zwischen 50 und 2500 MPa auszuwählen.

Bevorzugt ist eine Ausführungsform der mehrlagigen Kunststofffolie, bei der die Basisschicht und mindestens eine Deckschicht jeweils mindestens 50 Gewichtsprozent eines einzigen Polyolefins umfassen. Soweit im Rahmen dieser Erfindung keine anderen Angaben gemacht werden, sollen alle Prozentangaben als Gewichtsprozent verstanden werden. Als "eines einzigen Polyolefins" soll in diesem Zusammenhang verstanden werden, dass weitere Polyolefine (sowohl in der Basisschicht als auch der Deckschicht) vorhanden sein könnten, jedoch eine Polymerart zu mindestens 70 % sowohl in der Deckschicht als auch der Basisschicht vorkommt. Dabei soll wiederum "eine Polymerart" derart verstanden werden, dass die Polymere in Deckschicht und Basisschicht verschiedene Eigenschaften aufweisen können und sich auch in der molekularen Struktur unterscheiden können (beispielsweise der (mittleren) Kettenlänge) jedoch auf den selben Monomeren basieren. Ebenso könnten Mischungen verschiedener olefinischer Monomere vorhanden sein, die jedoch in den Polymeren der Deckschicht und Basisschicht anders angeordnet sind, sich also beispielsweise in der Abfolge im Polymer unterscheiden (random, alternierend, blockweise). Dies hat sich besonders vorteilhaft für das Recycling erwiesen, da so die Anzahl verschiedener zu recycelnder Polymere reduziert werden kann.

Bevorzugt umfassen die Basisschicht und mindestens eine Deckschicht jeweils mindestens 80 Gewichtsprozent, weiter bevorzugt mindestens 90 Gewichtsprozent, meist bevorzugt mindestens 95 Gewichtsprozent eines einzigen Polyolefins. Dadurch kann der Anteil anderer Komponenten weiter reduziert werden und damit die Recyclingfähigkeit weiter vereinfacht werden.

Unabhängig davon ist bevorzugt, dass die Basisschicht, die erste Deckschicht und die zweite Deckschicht jeweils mindestens 70 Gewichtsprozent, bevorzugt mindestens 80 Gewichtsprozent, weiter bevorzugt mindestens 90 Gewichtsprozent, meist bevorzugt mindestens 95 Gewichtsprozent eines einzigen Polyolefins umfassen. So kann der Anteil anderer Komponenten nochmals verringert werden und die Recyclingfähigkeit weiter verbessert werden.

Unabhängig von dem oben definierten Anteil des Polyolefins in der Basisschicht und mindestens einer Deckschicht ist bevorzugt, dass das darin enthaltene Polyolefin Polyethylen oder Polypropylen ist. Diese Materialien sind besonders gut verfügbar und es bestehen etablierte Verfahren zu deren Recycling. Darüber hinaus können die Eigenschaften dieser Polymere in einem besonders weiten Bereich modifiziert werden und dadurch auf bestimmte Anforderungen in der mehrlagigen Kunststofffolie angepasst werden. Trotz dieser Anpassung bleibt dabei die Recyclingfähigkeit erhalten.

Es wurde weiterhin festgestellt, dass eine Barriere teilweise erst durch eine Verbindung der Kunststofffolie mit anderen Folien und/oder Beschichtungen erreicht wird.

Um die geforderte Barrierewirkung zu erreichen wird im Rahmen der Erfindung vorgeschlagen, Barriereschichten aus OPE (oriented Polyethylen) oder OPP (oriented Polypropylen) oder Polyolefinen zu verwenden, optional mit Metallisierung, EVOH (Ethylenvinylalkohol), AlOx- und/oder SiOx-Beschichtung.

Bevorzugt eignet sich die hier beschriebene Folie als Verpackung, insbesondere als Vakuumverpackung etwa für Kaffee. Dort sind die besonderen Falteigenschaften vorteilhaft. Die beschriebene Kunststofffolie wird dann beispielsweise in Verbindung mit einer BOPP Folie, insbesondere in einem Duplex Laminat, verwendet.

Speziell die Falteigenschaft und daraus resultierende Rückstellkräfte sind für diese Anwendung bedeutend. Im Abpackprozess wird das Material zunächst in die jeweils gewünschte Form gebracht und gefaltet. Danach durchläuft das Material einige Prozessschritte ohne Führung, wobei währenddessen die vorher erzeugte Form beibehalten werden muss. Sofern ein Material ohne besondere Falteigenschaften verwendet wird, nimmt die Verpackung eine veränderte Form an, sodass eine einwandfreie Maschinengängigkeit nicht gewährleistet ist.

Mit dem erfindungsgemäßen Material wird bewirkt, dass die zu Prozessbeginn gefaltete Form auf Grund der guten Deadfold Eigenschaften auch ohne Führung beibehalten wird.

Auch für den Prozessschritt der Etikettierung ist die Falteigenschaft des Materials von Bedeutung. Nachdem die Verpackung mit einem Produkt befüllt wird, findet eine Kopffaltung statt. Nach der Faltung wird ein Klebeetikett aufgebracht. Um Fehlverklebungen zu vermeiden, ist es notwendig, dass sich die Kopffaltung nicht wieder spontan öffnet.

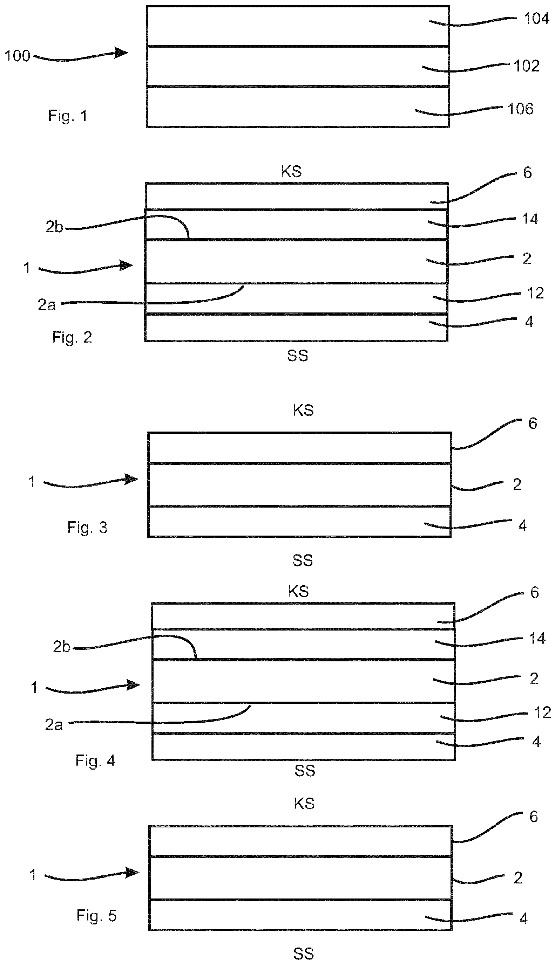

Bei einer weiteren bevorzugten Ausführungsform ist die erste Deckschicht nicht siegelfähig ausgestaltet, und enthält anstelle des Terpolymers oder des Peelcompounds PP Homopolymere und/oder PP Random Copolymere und/oder PP Blockcopolymere oder Mischungen aus den vorhergenannten Typen, wie es auch in der Basisschicht und der zweiten Deckschicht verwendet wird. Dies wird unter Bezugnahme auf Fig. 2 genauer erläutert.

Es können (wie auch bei den anderen Ausführungsbeispielen) weitere Schichten zwischen der Basisschicht und der Deckschicht angeordnet werden. In zumindest einer Schicht und/oder zwischen zumindest zwei Schichten kann das die Falteigenschaften verbessernde Material verwendet werden. Am Beispiel von COC wird bevorzugt in den Zwischenlagen COC eingesetzt. Am Beispiel von Twistharz wird bevorzugt in allen Lagen Twistharz eingesetzt.

Bei einer weiteren vorteilhaften Ausführungsform ist eine Siegelinitiierungstemperatur (SIT) der Kunststofffolie zwischen 50°C und 200°C bevorzugt zwischen 60°C und 180°C und besonders bevorzugt zwischen 70°C und 160°C.

Bei einer weiteren vorteilhaften Ausführungsform liegt ein Elastizitätsmodul der Kunststofffolie zwischen 50 MPa und 2500 MPa bevorzugt zwischen 500 MPa und 2200 MPa.

Bei einer weiteren bevorzugten Ausführungsform weist wenigstens eine Schicht mindestens 50 Gewichtsprozent, bevorzugt mindestens 75 Gewichtsprozent, weiter bevorzugt mindestens 90 Gewichtsprozent eines einzigen Polyolefins auf. Insbesondere handelt es sich bei diesem Polyolefin um Polyethylen oder Polypropylen.

Bevorzugt weisen die Basisschicht und/oder mindestens eine Deckschicht, bevorzugt die erste Deckschicht und die zweite Deckschicht, jeweils mindestens 50 Gewichtsprozent, bevorzugt mindestens 75 Gewichtsprozent, weiter bevorzugt mindestens 90 Gewichtsprozent eines einzigen Polyolefins auf, wobei dieses Polyolefin bevorzugt Polyethylen oder Polypropylen ist.

Die vorliegende Erfindung ist weiterhin auf ein Folienlaminat mit zumindest einer Trägerschicht und einer mit dieser Trägerschicht verbundenen Kunststofffolie der oben beschriebenen Art gerichtet.

Dabei können adhäsive Substanzen verwendet werden. Diese können dabei sowohl lösemittelfrei als auch lösemittelhaltig ausgestaltet sein. Bei dem Verfahren zur Verbindung der Trägerschicht mit der Kunststofffolie kann es sich um ein Verfahren handeln, welches aus einer Gruppe von Verfahren ausgewählt ist, welche Extrusionskaschierung, Extrusionsbeschichtung oder Klebekaschierung enthält.

Bei einer weiteren bevorzugten Ausführungsform werden die Kunststofffolie und die zumindest eine Trägerschicht mittels Extrusionskaschierung zu einem Laminat verbunden.

So ist es möglich, dass es sich bei dem Laminat um ein Duplex - Laminat aus einer Barrierefolie und einer Kunststofffolie handelt (wobei diese Kunststofffolie bevorzugt eine siegelfähige Deckschicht aufweist.

Daneben wäre es auch denkbar, dass es sich bei dem Laminat um ein Triplex - Laminat mit einer Barrierefolie, einer Kunststofffolie (insbesondere der oben beschriebenen Art) und einer Siegelfolie handelt.

Dabei ist es möglich, dass diese Siegelfolie ein oder mehrschichtig aufgebaut ist. Bevorzugt besteht die Siegelfolie aus PE oder PP. Bevorzugt enthält die Siegelfolie Terpolymer und/oder Peelcompound.

Bei einer weiteren bevorzugten Ausführungsform ist die Trägerschicht aus einem Polyolefin hergestellt. Dabei ist das Polyolefin der Trägerschicht bevorzugt sortengleich zu dem Polyolefin der Kunststofffolie. Somit wird die Rezyklierbarkeit des Laminats begünstigt.

Bei einer weiteren vorteilhaften Ausführungsform ist die Trägerschicht gereckt. Dabei ist es möglich, dass ein Recken in wenigstens einer Richtung erfolgt, es wären jedoch auch beide, d. h. zwei zueinander senkrechte Richtungen bei der Reckung möglich.

Bei einer weiteren vorteilhaften Ausführungsform ist wenigstens eine Trägerschicht metallisiert. Bei einer weiteren bevorzugten Ausführungsform ist wenigstens eine Trägerschicht beschichtet und besonders bevorzugt mit einem Material beschichtet und insbesondere einem anorganischen Material beschichtet.

Bei diesem Material kann es sich um ein Material handeln, welches aus einer Gruppe von Materialien ausgewählt ist, welche EVOH, PVOH, PVDC, AlOx, SiOx oder andere geeignete Barrierematerialien enthält.

Bei einer weiteren vorteilhaften Ausführungsform weist das Laminat auf zumindest einer der außenliegenden oder innenliegenden Seite einen Druck und/oder einen Lack auf.

Die vorliegende Erfindung ist weiterhin auf Verpackungen für Lebensmittel, insbesondere Vakuumverpackungen mit einer Kunststofffolie der oben beschriebenen Art und/oder einem Folienlaminat der oben beschriebenen Art gerichtet. Besonders bevorzugt handelt es sich bei dem zu verpackenden Lebensmittel um ein in körniger, pulverförmiger, granulatförmiger Konsistenz vorliegendes Produkt wie insbesondere aber nicht ausschließlich Kaffee oder Kaffeebohnen.

Besonders bevorzugt handelt es sich bei der Verpackung um eine siegelfähige und/oder faltbare Verpackung. Bevorzugt weist diese Verpackung eine Folie und/oder ein Laminat auf.

Bei einer weiteren bevorzugten Ausführungsform handelt es sich bei der Verpackung um eine faltbare Verpackung, wobei besonders bevorzugt die Falteigenschaften dieser Verpackung verbessert sind. Besonders bevorzugt sind die Falteigenschaften in der oben beschriebenen Weise verbessert und/oder insbesondere durch die Verwendung der oben beschriebenen Materialien und/oder Komponenten.

Die vorliegende Erfindung ist weiterhin auf Verfahren zur Herstellung einer mehrlagigen Kunststofffolie, insbesondere einer Kunststofffolie der oben beschriebenen Art oder eines Laminats der oben beschriebenen Art gerichtet.

Dabei erfolgt in einem Verfahrensschritt ein Plastifizieren und Homogenisieren der für die Herstellung zu verwendenden Materialien. Dazu wird bevorzugt das in Pulver- oder Granulatform vorliegende Material, vorzugsweise thermoplastischer Kunststoff, in einem Extruder auf eine bestimmte Temperatur erwärmt und geschmolzen.

Bevorzugt erfolgt in einem weiteren und insbesondere einem nachfolgenden Verfahrensschritt eine Ausbildung eines Schichtaufbaus, wobei bevorzugt ein Zusammenführen von Schmelzsträngen, insbesondere in einem Verteilerkopf erfolgt.

Dazu wird bevorzugt das Material vom Extruder, in der Regel einer Extruderschnecke, mit einem bestimmten Druck zu dem Formwerkzeug transportiert und durch eine Extrusionsdüse gepresst. Dabei können mehrere Kunststofflagen gleichzeitig übereinander zu einer mehrlagigen Kunststofffolie extrudiert werden, was als Coextrusion bezeichnet wird.

In einem weiteren Verfahrensschritt erfolgt ein Ausformen, Abkühlen und Aufwickeln der Folienschichten.

Besonders bevorzugt findet ein Extrusionsverfahren Anwendung.

Dazu wird bevorzugt bei einem Blasfolienextrusionsverfahren die Kunststoffschmelze durch eine Düse und insbesondere eine Runddüse gepresst. Nach Austreten aus der Düse bzw. Runddüse wird das Material zu einem Schmelzeschlauch (insbesondere senkrecht nach oben (oder nach unten)) ausgeformt, bevorzugt mit Luft aufgeblasen und vorteilhaft zugleich von außen und/oder innen gekühlt.

Sobald der Kunststoff unter den Schmelztemperaturbereich abgekühlt ist, wird der Folienschlauch, bevorzugt mithilfe von zwei gegenüberliegenden Gleitwalzen, zusammengelegt, mit Abzugswalzen abgezogen und bevorzugt zu einer oder mehreren Folienbahnen aufgeschnitten und bevorzugt anschließend aufgewickelt.

Die Dicke und Breite der Folie werden - bevorzugt durch das Abzugs- und Aufblasverhältnis - definiert, also das Verhältnis von Abzugsgeschwindigkeit zu Extrusionsgeschwindigkeit beziehungsweise das Verhältnis von Blasendurchmesser zu Ringspaltdurchmesser.

Bevorzugt wird bei einer Flachfolienextrusion die Kunststoffschmelze durch eine Breitschlitzdüse extrudiert und insbesondere auf eine Kühlwalze extrudiert, wo sie abgekühlt und verfestigt wird. Bevorzugt wird die dabei entstehende Kunststofffolie von der Kühlwalze abgezogen und kann der weiteren Verarbeitung zugeführt werden.

Bevorzugt handelt es sich bei dem Verfahren um eine Flachfolien- oder Blasfolienextrusion.

Bevorzugt erfolgt weiterhin eine Extrusionsbeschichtung, insbesondere zum Anbringen wenigstens einer Schicht.

Bei einem weiteren bevorzugten Verfahren erfolgt eine Kaschierung und insbesondere eine Extrusionskaschierung.

Extrusionsbeschichtung und Extrusionskaschierung sind Weiterverarbeitungsverfahren, mit deren Hilfe verschiedene Trägermaterialien zu einem Folienverbund (Laminat) kombiniert werden können.

Bei der Extrusionsbeschichtung wird geschmolzener thermoplastischer Kunststoff durch eine horizontale Düse und insbesondere eine Breitschlitzdüse auf eine zugeführte Materialbahn aufgetragen. Das so dauerhaft beschichtete Bahnmaterial stellt das Endprodukt der Extrusionsbeschichtungsprozesses dar.

Bei der Extrusionskaschierung ist die Düse, insbesondere eine Breitschlitzdüse über einem Walzenspalt angeordnet an dem zwei Materialbahnen zusammenführt werden. Der thermoplastische Kunststoff fungiert dabei bevorzugt als Bindemittel dieser Materialbahnen.

Bei dem Extrusionsverfahren zur Herstellung der Kunststofffolie kann es sich um ein Verfahren handeln, welches aus einer Gruppe von Verfahren ausgewählt ist, welche Extrusionskaschierung, Extrusionsbeschichtung, Flachfolienextrusion oder Blasfolienextrusion enthält. Bevorzugt wird unter Anwendung der beschriebenen Verfahren eine mehrlagige Kunststofffolie mit einer Basisschicht, einer ersten Deckschicht und einer zweiten Deckschicht hergestellt. Dabei ist oder wird die erste Deckschicht zumindest mittelbar an einer ersten Oberfläche der Basisschicht angeordnet und die zweite Deckschicht zumindest mittelbar an einer zweiten Oberfläche der Basisschicht angeordnet.

Weiterhin bevorzugt kann die Kunststofffolie mit zumindest einer Trägerschicht zu einem Laminat verbunden werden, wobei bevorzugt ein Verfahren ausgewählt aus Extrusionsbeschichtung oder Extrusionskaschierung oder Klebekaschierung verwendet wird.

Besonders bevorzugt, liegt bei der Herstellung eine Verarbeitungstemperatur des Twistharzes zwischen 170 °C und 290 °C, bevorzugt zwischen 190 °C und 250 °C, bevorzugt zwischen 210 °C und 250 °C und besonders bevorzugt zwischen 220 °C und 240 °C.

Bevorzugt werden diese hier angegebenen Temperaturbereiche auch für die anderen verwendeten Materialien eingesetzt.

Weitere Vorteile und Ausführungsformen ergeben sich aus den beigefügten Zeichnungen. Darin zeigen:
- Fig. 1: eine mehrlagige Folie nach dem Stand der Technik;
- Fig. 2: eine erfindungsgemäße Folie in einer ersten Ausführungsform;
- Fig. 3: eine erfindungsgemäße Folie in einer zweiten Ausführungsform;
- Fig. 4: eine erfindungsgemäße Folie in einer dritten Ausführungsform;
- Fig. 5: eine erfindungsgemäße Folie in einer vierten Ausführungsform;
- Fig. 6: ein erfindungsgemäßes Laminat mit einer erfindungsgemäßen Folie;
- Fig. 7: ein Laminat in einer zweiten Ausführungsform;
- Fig. 8: ein Laminat in einer dritten Ausführungsform;
- Fig. 9: ein Laminat in einer vierten Ausführungsform;
- Fig. 10: ein Laminat in einer fünften Ausführungsform und
- Fig. 11: ein Laminat in einer sechsten Ausführungsform.

Fig. 1 zeigt einen mehrlagigen Verbund 100 nach dem Stand der Technik. Dieser Verbund ist hier aus drei Schichten und/oder Folien 102, 104 und 106 aufgebaut. Genauer handelt es sich bei der Schicht 102 um eine Aluminiumschicht, an der eine PE Deckschicht 106 und eine PET - Schicht 104 angeordnet sind.

Fig. 2 zeigt eine erfindungsgemäße Kunststofffolie 1 in einer ersten Ausführungsform. Dabei bezieht sich das Bezugszeichen 2 auf eine Basisschicht, die insbesondere aus PP hergestellt ist und insbesondere aus PP Homopolymeren, PP-Random- oder Block-Copolymeren oder Mischungen hieraus. Das Bezugszeichen 2a bezieht sich auf eine erste Oberfläche der Basisschicht und das Bezugszeichen 2b bezieht sich auf eine zweite Oberfläche der Basisschicht 2. An diesen Oberflächen 2a und 2b sind bei dieser Ausführungsform jeweils Schichten 12 und 14 aus COC angeordnet. Diese Schichten dienen der Verbesserung der deadfold - Eigenschaften.

Das Bezugszeichen 4 kennzeichnet eine erste Deckschicht und das Bezugszeichen 6 kennzeichnet eine zweite Deckschicht, welche hier auch jeweils Abschlussschichten der Folie 1 ausbilden. Bevorzugt ist die erste Deckschicht hier auf Basis eines Terpolymers ausgeführt.

Die zweite Deckschicht 6 besteht hier bevorzugt aus PP Homopolymeren, PP-Random- oder Block-Copolymeren oder Mischungen hieraus.

Das Bezugszeichen SS kennzeichnet eine Siegelseite, welche bevorzugt dem zu verpackenden Gut zugewandt ist und das Bezugszeichen KS eine Kaschierseite, die bevorzugt nach außen weist und an welcher die Kunststofffolie mit weiteren Folien/Trägerschichten verbunden werden kann.

Fig. 3 zeigt eine weitere Ausgestaltung einer erfindungsgemäßen Folie. Die Basisschicht 2 ist hier in ähnlicher Weise ausgebildet wie im Fall von Fig. 2 weist aber bevorzugt ein die Deadfold - Eigenschaften verbesserndes Material, hier in Form eines Twistharzes auf.

Die erste Deckschicht 4 entspricht hier bevorzugt der in Fig. 2 gezeigten Deckschicht. Bevorzugt besteht die zweite Deckschicht hier ebenfalls aus PP Homopolymeren, PP-Random- oder Block-Copolymeren oder Mischungen hieraus. Besonders bevorzugt enthält diese zweite Deckschicht 6 auch ein Twistharz.

Fig. 4 zeigt eine weitere Ausgestaltung einer erfindungsgemäßen Folie. Der Aufbau dieser Folie 1 entspricht hier im Wesentlichen dem in Fig. 2 gezeigten Aufbau. Dieser Aufbau verwendet jedoch anstelle von PP als Basismaterial PE.

Fig. 5 zeigt eine weitere vorteilhafte Ausführungsform einer erfindungsgemäßen Folie. Der Aufbau dieser Folie entspricht im Wesentlichen der in Fig. 3 gezeigten Folie, wobei jedoch auch hier anstelle von PP als Basismaterial PE verwendet wird.

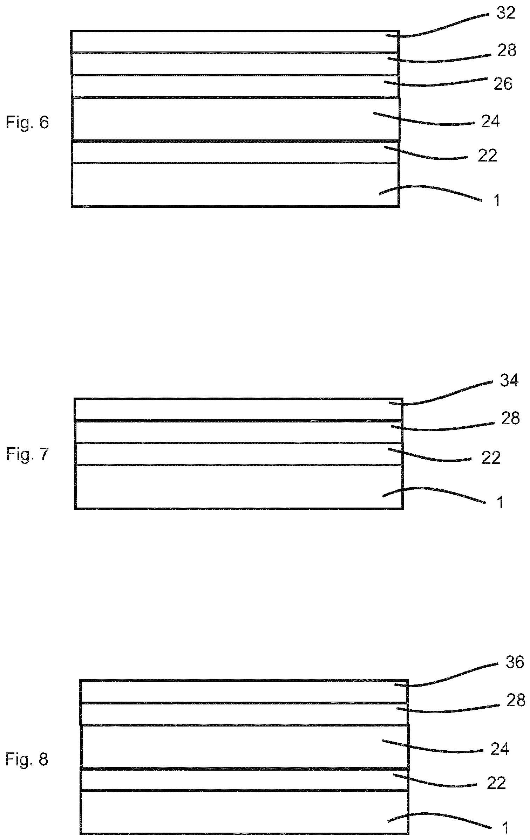

Fig. 6 zeigt ein erfindungsgemäßes Laminat, welches eine erfindungsgemäße mehrlagige Folie 1 aufweist. Bevorzugt ist die Folie 1 hier an der Siegelseite angeordnet und/oder dem zu verpackenden Gut (nicht gezeigt) zugewandt.

An der Folie 1 ist eine Klebeschicht 22 angeordnet, welche ein Lösungsmittel aufweisen kann oder auch lösungsmittelfrei ausgebildet sein kann.

Das Bezugszeichen 24 kennzeichnet eine Barriereschicht, welche bevorzugt an der Klebeschicht 22 angeordnet ist. Bevorzugt handelt es sich bei dieser Barriereschicht um eine Schicht aus OPP und/oder um eine metallisierte Schicht.

An dieser Barriereschicht ist wiederum eine Klebeschicht 26 angeordnet, welche ein Lösungsmittel aufweisen kann oder auch lösungsmittelfrei ausgebildet sein kann.

Das Bezugszeichen 28 kennzeichnet einen Druck und das Bezugszeichen 32 eine Abdeckschicht, welche hier bevorzugt aus BOPP besteht. Es ist jedoch auch die Verwendung anderer Folien und/oder anderer Materialien denkbar.

Fig. 7 zeigt eine weitere Ausführungsform eines erfindungsgemäßen Laminats. Bei dieser Ausführungsform ist an der Folie 1 ebenfalls eine Klebeschicht 22 angeordnet. Ein Druck 28 ist hier an der Schicht bzw. Abdeckschicht 34 angeordnet und bevorzugt ist diese Schicht 34 über die Klebeschicht an der Folie 1 angeordnet. Bevorzugt handelt es sich bei der Schicht bzw. Abdeckschicht um eine (insbesondere klare) Barriereschicht aus OPP.

Fig. 8 zeigt eine weitere Ausführungsform eines erfindungsgemäßen Laminats. Dieser Aufbau ist ähnlich dem in Fig. 6 gezeigten Aufbau, wobei jedoch hier auf die zweite Klebeschicht 26 verzichtet wird. Das Bezugszeichen 36 kennzeichnet eine Schutzschicht, die den Außendruck schützt.

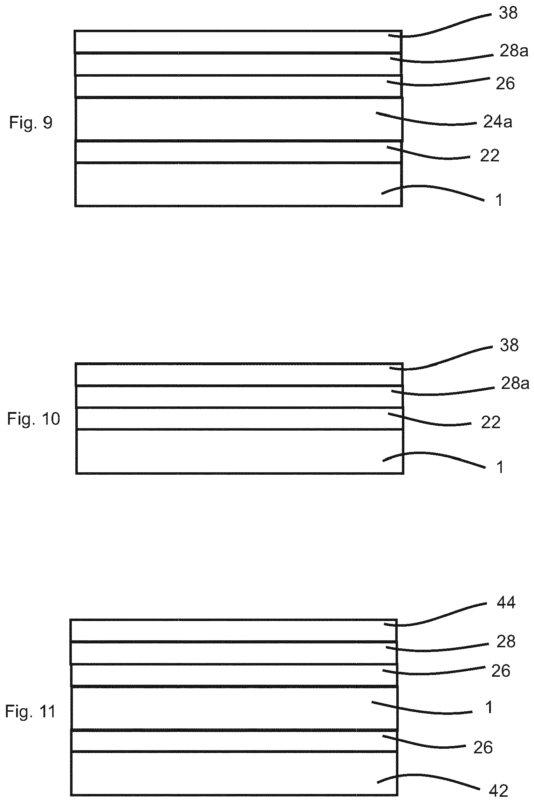

Fig. 9 zeigt eine weitere Ausgestaltung eines erfindungsgemäßen Laminats. Auch dieses Laminat ist in ähnlicher Weise aufgebaut wie das in Fig. 6 gezeigte Laminat. Zwischen den beiden Klebeschichten 22 und 26 ist hier jedoch eine Barriereschicht 24a aus OPE vorgesehen. Das Bezugszeichen 28a kennzeichnet hier einen Konterdruck und das Bezugszeichen 38 eine Barriereschicht aus OPE.

Fig. 10 zeigt ein weiteres erfindungsgemäßes Laminat, wobei hier jedoch neben der Folie 1 nur drei Schichten vorgesehen sind und auf die Schichten 24a und 26 verzichtet wurde.

Es ist grundsätzlich möglich, jede der in den Fig. 2 - 5 gezeigten Folien mit den in den Fig. 6 bis 10 gezeigten Laminaten einzusetzen.

Fig. 11 zeigt ein weiteres erfindungsgemäßes Laminat. Hier ist an einer Seite der Kunststofffolie 1 über eine Klebeschicht 26 eine Siegelfolie 42 und insbesondere eine Siegelfolie aus PE angeordnet.

An der anderen Seite der Kunststofffolie ist ebenfalls eine Klebeschicht 26 angeordnet sowie auch ein Druck 28. Das Bezugszeichen 44 kennzeichnet eine Barrierefolie, welche bevorzugt über die Klebeschicht 26 an der Kunststofffolie 1 angeordnet ist. Bevorzugt handelt es sich bei der Barrierefolie 44 um eine Barrierefolie aus OPE. Bei einer weiteren bevorzugten Ausführungsform ist diese Barrierefolie 44 metallisiert.

Bevorzugt handelt es sich bei dem in Fig. 11 gezeigten Laminat um einen Triplex - Verbund.

Es wird darauf hingewiesen, dass die in den einzelnen Figuren gezeigten Laminate auch miteinander kombinierbar sind. So wäre es möglich, dass bestimmte Schichten aus einem der gezeigten Laminate kombiniert werden mit Schichten aus einem anderen Laminat. Der Fachmann erkennt daher, dass auch weitere als die in den obigen Figuren gezeigten Laminate Anwendung finden können.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Mehrlagige Kunststofffolie (1) mit einer Basisschicht (2), mit einer ersten Deckschicht (4), welche zumindest mittelbar an einer ersten Oberfläche (2a) der Basisschicht angeordnet ist, und mit einer zweiten Deckschicht (6), welche zumindest mittelbar an einer zweiten Oberfläche (2b) der Basisschicht (2) angeordnet ist, wobei die zweite Oberfläche (2b) der ersten Oberfläche (2a) gegenüberliegt,
**dadurch gekennzeichnet, dass**
die Kunststofffolie unter Verwendung eines Extrusionsverfahrens hergestellt ist und die Kunststofffolie (1) wenigstens ein die Falteigenschaften der Kunststofffolie verbesserndes Material aufweist.

2. Mehrlagige Kunststofffolie nach Anspruch 1,
**dadurch gekennzeichnet, dass**
wenigstens eine der Schichten (2, 4, 6) das die Falteigenschaften verbessernde Material aufweist und/oder das die Falteigenschaften verbessernde Material zwischen wenigstens zwei Schichten angeordnet ist.

3. Mehrlagige Kunststofffolie nach wenigstens einem der vorangegangenen Ansprüche,
**dadurch gekennzeichnet, dass**
ein Anteil des die Falteigenschaften verbessernden Materials unter 45% liegt.

4. Mehrlagige Kunststofffolie nach wenigstens einem der vorangegangenen Ansprüche,
**dadurch gekennzeichnet, dass**
das die Falteigenschaften verbessernde Material aus einer Gruppe von Materialien ausgewählt ist, welche amorphe Polyolefine, Cycloolefin-Copolymere (COC) und auf Basis eines Kohlenwasserstoffharzes hergestellte Materialen enthält.

5. Mehrlagige Kunststofffolie nach wenigstens einem der vorangegangenen Ansprüche,
**dadurch gekennzeichnet, dass**
zumindest eine außenliegende Lage wenigstens einer Deckschicht siegelfähig ist,
wobei bevorzugt diese Lage und/oder diese Deckschicht ein Siegelpolymer ist.

6. Kunststofffolie (1) nach dem vorangegangenen Anspruch,
**dadurch gekennzeichnet, dass**
das Siegelpolymer der siegelfähigen Lage und/oder Deckschicht auf Basis eines Terpolymers und/oder eines Polyolefins gebildet ist und/oder ein Terpolymer und/oder ein Polyolefin enthält.

7. Mehrlagige Kunststofffolie nach wenigstens einem der vorangegangenen Ansprüche,
**dadurch gekennzeichnet, dass**
eine Siegelinitiierungstemperatur (SIT) der Kunststofffolie zwischen 50° und 200°C, bevorzugt zwischen 60° und 180°C und besonders bevorzugt zwischen 70° und 160°C liegt und/oder der Elastizitätsmodul der Kunststofffolie zwischen 50MPa und 2500MPa, bevorzugt zwischen 500MPa und 2200 MPa liegt.

8. Mehrlagige Kunststofffolie nach wenigstens einem der vorangegangenen Ansprüche,
**dadurch gekennzeichnet, dass**
die Basisschicht (2) und/oder mindestens eine Deckschicht (4, 6), bevorzugt die erste Deckschicht (4) und die zweite Deckschicht (6), jeweils mindestens 50 Gewichtsprozent, bevorzugt mindestens 75 Gewichtsprozent, weiter bevorzugt mindestens 90 Gewichtsprozent eines einzigen Polyolefins aufweisen, wobei dieses Polyolefin bevorzugt Polyethylen oder Polypropylen ist.

9. Folienlaminat mit zumindest einer Trägerschicht und einer mit dieser Trägerschicht verbundenen Kunststofffolie nach wenigstens einem der vorangegangenen Ansprüche.

10. Folienlaminat nach Anspruch 8,
**dadurch gekennzeichnet, dass** die Trägerschicht aus einem Polyolefin, bevorzugt Polyethylen und/oder Polypropylen, hergestellt ist und/oder die Trägerschicht gereckt ist.

11. Folienlaminat nach wenigstens einem der vorangegangenen Ansprüche,
**dadurch gekennzeichnet, dass**
zumindest eine Trägerschicht metallisiert ist und/oder zumindest eine Trägerschicht mit einem anorganischen Material beschichtet ist.

12. Folienlaminat nach einer der vorangegangenen Ansprüche,
**dadurch gekennzeichnet, dass**
das Laminat auf zumindest einer der außenliegenden oder innenliegenden Seite einen Druck und/oder einen Lack aufweist.

13. Verpackung für Lebensmittel, insbesondere Vakuumverpackung, insbesondere für Kaffee mit einer Kunststofffolie nach wenigstens einem der vorangegangenen Ansprüche 1 - 7 und/oder einem Folienlaminat nach wenigstens einem der vorangegangenen Ansprüche 8 - 12.

14. Verfahren zur Herstellung einer mehrlagigen Kunststofffolie, insbesondere einer Kunststofffolie nach wenigstens einem der vorangegangenen Ansprüche oder eines Laminats nach wenigstens einem der vorangegangenen Ansprüche, mit den Schritten:
- Plastifizieren und Homogenisieren der für die Herstellung zu verwendenden Materialien;
- Ausbildung eines Schichtaufbaus, wobei bevorzugt ein Zusammenführen von Schmelzsträngen, insbesondere in einem Verteilerkopf erfolgt;
- Ausformen, Abkühlen und bevorzugt Aufwickeln der Folienschichten.

15. Verfahren nach Anspruch 14,
**dadurch gekennzeichnet, dass**
ein Extrusionsverfahren Anwendung findet.
